# EUROPEAN PATENT APPLICATION

(11) **EP 4 554 042 A1**
(43) Date of publication of application: **14.05.2025**
(21) Application number: 24211778.6
(22) Date of filing: 08.11.2024
(51) Int. Cl.: H02J 7/00, H02M 7/483

(54) **MODULAR POWER ELECTRONIC SYSTEM FOR AN AIRCRAFT INCLUDING SEVERAL INVERTER SUB-MODULES WITH ENERGY STORAGE**

(30) Priority: 10.11.2023 EP 23209114
(71) Applicant: Airbus S.A.S., 31700 Blagnac (FR)
(72) Inventor: Kapaun, Florian, 82024 Taufkirchen (DE); Galek, Marek, 82398 Polling (DE)
(74) Representative: OTN Airbus SAS

(57) **Abstract**

In order to provide a new inverter architecture with high flexibility regarding the installation flexibility as well as an improved redundancy and fail-safe operation capability, the invention provides a power electronic system (14) for providing an aircraft component with electrical power, the power electronic system (14) comprising a plurality of sub-modules (SM1-SM6, SM) each including an energy storage (26) and an inverter (28). In preferred embodiments, each sub-module also comprises a small output filter (38).

## Description

The invention relates to a power electronic system for providing an aircraft component, especially a drive train, with electrical power. Further, the invention relates to a sub-module for such power electronic system. Still further, the invention relates to a power train for an aircraft and an aircraft equipped with such power electronic system as well as to an operation method therefore.

For technical background, reference is made to the following literature:
[1] Wikipedia, PT2-Glied, download from https://de.wikipedia.org/w/index.php?title=PT2-Glied&oldid=229466572 on October 10, 2023.

State of the art power electronics systems for e.g., drivetrain applications consist of a centralized energy storage system (large battery), combined with at least one inverter.

An object of the invention is to provide a new inverter architecture with high flexibility regarding the installation flexibility as well as an improved redundancy and fail-safe operation capability.

For achieving such object, the invention provides a power electronic system according to claim 1. Preferred uses of such power electronic systems and a sub-module therefore are subject matters of the further independent claims.

Advantageous embodiments are subject-matters of the dependent claims.

The invention provides according to a first aspect thereof a power electronic system for providing an aircraft component with electrical power, the power electronic system comprising a plurality of sub-modules each including an energy storage and an inverter.

In some embodiments, the inverter is configured to invert a DC power of the energy storage into AC power for the aircraft component.

In some embodiments, the power electronic system comprises at least a first and a second sub-module connected in series.

In some embodiments, the power electronic system is configured as a multi-phase power system wherein each phase comprises a plurality of the sub-modules, especially such that each phase comprises the same number of sub-modules.

In some embodiments, the energy storage of each sub-module comprises at least one batterie cell or several batterie cells.

Especially, the inverter of each sub-module is configured to operate bi-directionally.

In some embodiments, each sub-module comprises a capacitor connected parallel to the energy storage.

In preferred embodiments, each sub-module comprises an output filter. Preferably, the output filter is provided at the output of the inverter.

In some embodiments, the output filter is a LC filter with PT2 behaviour. For the definition of PT2 behaviour, see for example the literature [1]. In some embodiments, the output filter is a sine filter. In some embodiments, the output filter is a low pass filter, especially with PT1 behaviour.

In some embodiments, the sub-modules are connected with a bus for carrying only sinusoidal currents.

In some embodiments, the power electronic system is configured such that DC power is only transmitted within the sub-modules.

According to another aspect, the invention provides a sub-module for a power electronic system according to any of the aforementioned embodiments, comprising a DC energy storage and an inverter for inverting DC power of the energy storage to AC power at the output of the sub-module.

According to another aspect, the invention provides a power train for an aircraft comprising an electrical consumer and a power electronic system according to any of the claims 1 to 9 for supplying the electrical consumer with AC power.

In some embodiments, the electrical consumer includes an electric motor, especially for a propulsion component of the aircraft.

According to another aspect, the invention provides an aircraft comprising a power-electronic system according to any of the aforementioned embodiments or a power train according to any of the aforementioned embodiments.

In some embodiments, the aircraft comprises a propulsion component on or in a wing of the aircraft wherein the propulsion component is driven by the power electronic system wherein the sub-modules thereof are distributed within the wing.

According to another aspect, the invention provides a method for operating a power electronic system according to any of the aforementioned embodiments, wherein the sub-modules are controlled like a multi-level inverter.

Preferred embodiments of the invention relate to a battery cell-based inverter for aircraft applications.

Preferred embodiments of the invention relate to power electronics and optimized inverters.

State of art multilevel inverters are composed of multiple switching units (submodules (SM)), put in series to overcome the voltage limitations of single semiconductor devices. Additionally, multilevel systems allow for finer gradation of the output voltage, thus drastically reducing interference emissions and the required filtering effort. Standard multilevel systems contain filters at the output of each phase leg to minimize remaining disturbances.

In some embodiments, a new inverter architecture is provided that benefits from distributed energy storages directly linked to the inverters. In some embodiments, the system is modular and multilevel and comes with the already known benefits like low EMI disturbance and less filter effort. The direct integration of an energy storage system into each single submodule eases scalability, reduces EMI disturbances and allows to build a redundant system without large overhead.

According to preferred embodiments, no long leads (busbars) are needed anymore due to the direct coupling between inverter and energy storage (battery).

Additionally, in some embodiments, the DC-link capacitor can be minimized (only commutation energy has to be provided by the capacitor) and therefore weight can be reduced. In some embodiments, the inverters operate bidirectionally so that charging, discharging and balancing of the single batteries is possible.

Due to the multiple submodules and energy sources, a high amount of reliability and fail safety is achieved. In failure cases of one or even multiple submodules (battery or inverter) the defect submodule can be easily bypassed and the complete system further operated.

Additionally, in some embodiments, much more flexibility regarding installation is given due to the smaller sub-components that can be placed decentralized.

For example, talking about a multi propeller aircraft with 2 props in each wing this could mean e.g., each prop has its own power electronics and energy storage system which is distributed across the whole wing.

To sum up, preferred embodiments of invention offer at least one, several or all of the following benefits:
- Redundancy is provided for
   - Battery
   - Electronic
- No additional charging infrastructure is necessary
- An enhanced weight distribution is possible (modular system with equal bricks)
- A scalable system is provided (higher voltage and or current ratings with additional SMs)
- no DC-Bus is needed, as result no DC breaker exists/is needed
- a bus connected the system component "carries" only sinusoidal currents this results in low EMI
- the system can be controlled like a multilevel inverter; as result only low voltage semiconductors (high efficiency) are needed, and only a low EMI arises
- Submodules can be placed "independent" of each other and can be distributed across a wide area

A preferred embodiment of the proposed system (based on e.g. a MMC topology) describes an inverter system based on submodules, which does not have the output filter at the phase output, but instead each individual submodule is equipped with a more efficient, small and lightweight filter.

Some embodiments of the invention comprise an inverter system composed of multiple submodules (SM) that are connected in series. Preferably, there is the same amount of SMs for each phase in a multi phase power system. In contrast to state of art systems, each SM also has its own energy storage and comes with a small output filter. This could be a typical low pass filter (PT1-behavior) or a sine-filter (LG-filter) with PT2 -behavior which is commonly used in inverter applications. Of course, other filter technologies are also conceivable.

Due to the integrated filter each connection between the submodules and the connection to the load show a good sine approximation. This leads to drastic reduction of common- and differential -mode disturbances as well as EMI interference.

Due to the integration of the filter inside each submodule some advantages can be realized:
- Each filter only affects a fraction of the total voltage and can therefore be designed much more efficiently.
- Additionally, the components used can be designed for lower voltages, which typically minimizes the required space.
- By applying sinus filtering to each submodule, the connections between the individual submodules become more sinusoidal, which can significantly reduce interference emissions, especially in modules that are spatially separated (typically in high voltage/high power areas).
- By integrating into each SM, the manufacturing process of the overall inverter can also be optimized, and by using, for example, SMD filter components, space and weight can be saved.
- In general, using smaller components can result in a higher quality factor.

Embodiments of the invention are explained below referring to the accompanying drawings in which:
- Fig. 1: is a schematic plan view of an embodiment of an aircraft with an electric drive train and an inverter architecture according to an exemplary embodiment of the invention;
- Fig. 2: is a block diagram of the drive train with the inverter structure including several sub-modules SMx; and
- Fig. 3: is a block diagram of one of the sub-modules SMx according to an exemplary embodiment of the invention.

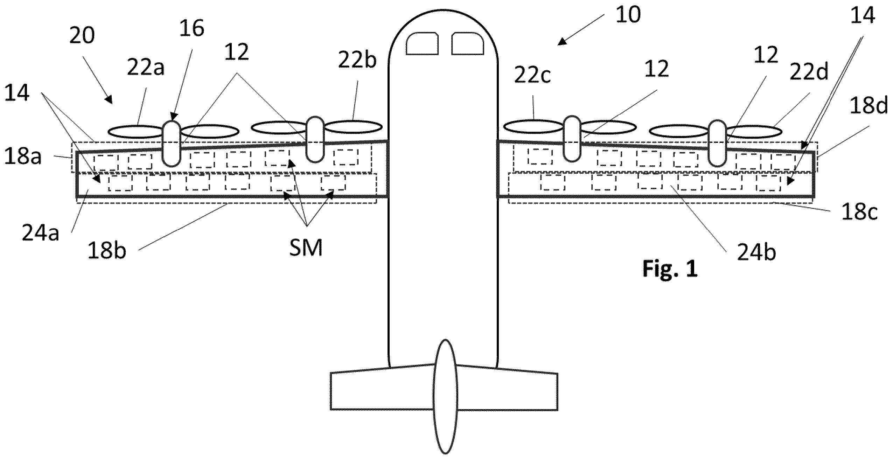

Fig. 1 shows an aircraft 10 having at least one electrical consumer 12 to be powered by alternating current such as a sinusoidal current and a power electronic system 14 for supplying the electrical consumer 12 with electrical power.

The electrical consumer 12 can be of any kind of aircraft component to be powered with AC power such as an electrical actor, a motor pump, or an electric motor M, 16.

Especially, the aircraft 10 has at least one power train 18a-18d equipped with the electrical consumer 12 e.g., the motor 16 and the power electronic system 14. In the embodiment shown, the at least one power train 18a-18d is configured as drive of a propulsion system 20 for the aircraft 10. For example, each power train 18a-18d has an electrically driven propeller 22a-22d. In the embodiment shown, a plurality of propellers 22a-22d is provided on each wing 24a, 24b of the aircraft 10.

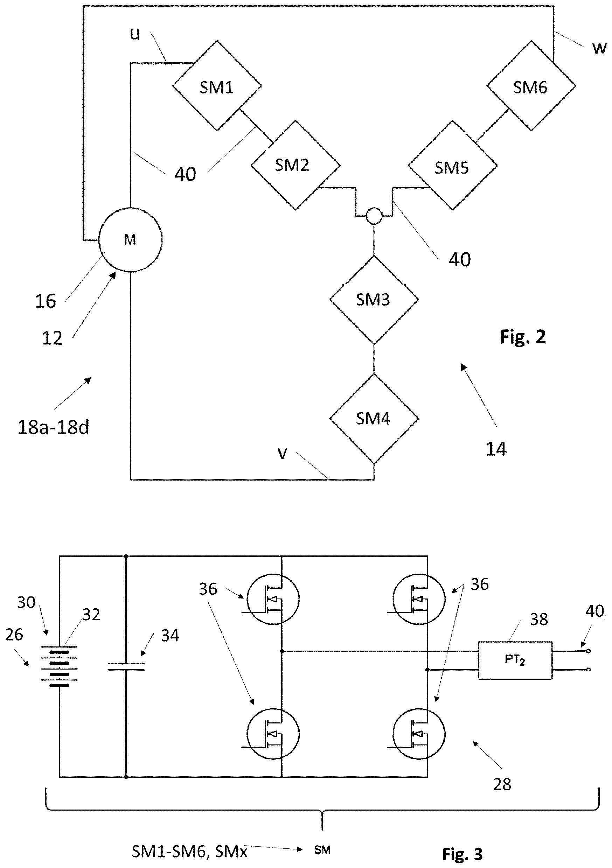

Fig. 2 shows a block diagram of the power electronic system 14 together with the electrical consumer 12 driven thereby. The power electronic system 14 is a modular power electronic system with several sub-modules SM1-SM6, shortly referred to as SMx or simply SM.

Fig. 3 shows a block diagram of the sub-module SM. Each sub-module SMx includes an energy storage 26 providing DC power and a preferably bidirectional inverter 28 for converting the DC power into AC power.

In some embodiments, the energy storage 26 is a battery 30 including one or preferably several battery cells 32. A capacity 34 is connected in parallel to the energy storage 26.

The inverter 28 includes several power switching elements 36. For example, the inverter 28 is configured as a full-bridge inverter. In some embodiments, an output filter 38 is provided at the output terminal of the inverter 28.

Referring to Fig. 2, several sub-modules SMx are connected in series by an AC bus 40 carrying sinusoidal currents only. The AC bus 40 further connects the electrical consumer 20 to the power electronic system 14.

In some embodiments, the power electronic system 14 is configured as a multi-phase system wherein each phase u, v, w includes a plurality of sub-modules SMx. In the embodiment shown, each phase u, v, w has the same number of sub-modules SMx each configured as shown in Fig. 3.

Referring again to Fig. 1, the sub-modules SMx of each power train 18a-18d are distributed in the corresponding wing 24a, 24b.

Referring again to Figs. 2 and 3, preferred embodiments of the power electronic system 14 are configured as an inverter system 42 composed of multiple submodules SM, SMx, SM1-SM6 that are connected in series. There is provided the same amount of SMs for each phase u, v, w, in a multi-phase power system. In contrast to state-of-the-art systems, each SM also has its own energy storage 26 and comes preferably with a small output filter 38, most preferred an LC-filter with PT2 behaviour (see e.g. [1]). Due to that, the complete energy storage system can be divided into x sub systems that are much smaller and more lightweight. In other embodiments, the output filter 38 is a typical low pass filter (PT1 behaviour). Of course, other filter techniques can also be used.

Additionally, the SMs can be distributed more widely as there are only sinusoidal shaped currents flowing between the single SMs and the motor M, 16.

The DC-part only exists inside each submodule SM which allows it to get rid of any kind of DC-breaker. Due to the high current capability of actual batteries 30, the SM-DC-link can be very small and only needs to absorb energy during the commutation phase. Typically, large DC-link capacitors are not needed anymore.

In order to provide a new inverter architecture with high flexibility regarding the installation flexibility as well as an improved redundancy and fail-safe operation capability, a power electronic system (14) for providing an aircraft component with electrical power has been described, the power electronic system (14) comprising a plurality of sub-modules (SM1-SM6, SM) each including an energy storage (26) and an inverter (28). Preferably, each sub-module has a small output filter (38).

### Reference sign list:

- 10: aircraft
- 12: electrical consumer
- 14: power electronic system
- 16, M: motor
- 18a-18d: power train
- 20: propulsion system
- 22a-22d: propeller
- 24a, 24b: wing
- 26: energy storage
- 28: inverter
- 30: battery
- 32: battery cell
- 34: capacitor
- 36: power switching element
- 38: output filter
- 40: AC bus
- 42: inverter system
- u, v, w: phase

## Claims

1. Power electronic system (14) for providing an aircraft component with electrical power, the power electronic system (14) comprising a plurality of sub-modules (SM1-SM6, SM) each including an energy storage (26) and an inverter (28).

2. Power electronic system (14) according to claim 1, wherein each sub-module (SM1-SM6, SM) comprises an output filter (38), preferably at the output of the inverter (28).

3. Power electronic system (14) according to claim 2, wherein the output filter (38) is
3.1 a low pass filter or
3.2 a filter, especially low pass filter, with PT1 behaviour or
3.3 a sine-filter or
3.4 a LC filter with PT2 behaviour.

4. Power electronic system (14) according to any of the preceding claims, wherein the inverter (28) is configured to invert a DC power of the energy storage (26) into AC power for the aircraft component.

5. Power electronic system (14) according to any of the preceding claims, comprising at least a first and a second sub-module (SM1, SM2) connected in series.

6. Power electronic system (14) according to any of the preceding claims, configured as a multi-phase power system wherein each phase (u, v, w) comprises a plurality of the sub-modules (SM1-SM6, SM), especially such that each phase (u, v, w) comprises the same number of sub-modules (SM1-SM6, SM).

7. Power electronic system (14) according to any of the preceding claims wherein
7.1 the energy storage (26) of each sub-module (SM1-SM6, SM) comprises at least one or several batterie cells (32) and/or
7.2 the inverter (28) of each sub-module is configured to operate bi-directionally and/or
7.3 wherein each sub-module (SM1-SM6, SM) comprises a capacitor (34) connected in a DC link parallel to the energy storage (26).

8. Power electronic system (14) according to any of the preceding claims wherein the sub-modules (SM1-SM6, SM) are connected with a bus (40) for carrying only sinusoidal currents.

9. Power electronic system (14) according to any of the preceding claims configured such that DC power is only transmitted within the sub-modules (SM1-SM6, SM).

10. Sub-module (SM1-SM6, SM) for a power electronic system (14) according to any of the preceding claims, comprising a DC energy storage (26) and an inverter (28) for inverting DC power of the energy storage (26) to AC power at the output of the sub-module (SM1-SM6, SM), and optionally an output filter (38).

11. Power train (18a-18d) for an aircraft (10) comprising an electrical consumer (12) and a power electronic system (14) according to any of the claims 1 to 9 for supplying the electrical consumer with AC power.

12. Power train (18a-18d) according to claim 11, wherein the electrical consumer (12) includes an electric motor (M, 16), especially for a propulsion component (22a-22d) of the aircraft (10).

13. Aircraft (10) comprising a power-electronic system (14) according to any of the claims 1 to 9 or a power train (18a-18d) according to any of the claims 11 or 12.

14. Aircraft (10) according to claim 13, comprising a propulsion component (22a-22d) on or in a wing (24a, 24b) of the aircraft (10) wherein the propulsion component (22a-22d) is driven by the power electronic system (18a-18d) and wherein the sub-modules (SM1-SM6, SM) thereof are distributed within the wing (24a, 24b).

15. Method for operating a power electronic system (14) according to any of the claims 1 to 9, wherein the sub-modules (SM1-SM6, SM) are controlled like a multi-level inverter.
